# EUROPEAN PATENT SPECIFICATION

(11) **EP 2 448 425 B1**
(45) Date of publication and mention of the grant of the patent: **05.09.2018**
(21) Application number: 10734567.0
(22) Date of filing: 05.07.2010
(51) Int. Cl.: A23K 20/158, A23K 20/10, A23K 50/10, A23K 50/70, A23K 50/30, A23K 50/80, A23L 33/12

(54) **ANIMAL FEED OR HUMAN FOOD FOR IMPROVING INTESTINAL BARRIER PROPERTIES**
TIERFUTTER ZUR VERBESSERUNG DER DARMBARRIERENEIGENSCHAFTEN
ALIMENTS POUR ANIMAUX POUR AMÉLIORER LES PROPRIÉTÉS DE LA BARRIÈRE INTESTINALE

(30) Priority: 03.07.2009 EP 09164557; 09.04.2010 EP 10159564
(43) Date of publication of application: 09.05.2012
(73) Proprietor: Nutreco Nederland B.V., 5831 JN Boxmeer (NL)
(72) Inventor: SMITS, Coenraad, Henricus, Maria, NL-6581 PC Malden (NL); VAN DAM, Johannes, Teunis, Pieter, NL-3903 GR (NL)
(74) Representative: van Someren, Petronella F. H. M.
(86) International application number: PCT/NL2010/050428
(87) International publication number: WO 2011/002298

(56) References cited:
- EP-A- 1 474 997
- EP-A- 1 661 574
- EP-A- 2 025 243
- EP-A1- 1 013 177
- WO-A-84/00668
- WO-A-97/00621
- WO-A-2008/135180
- GB-A- 1 420 299
- US-A- 3 564 098
- US-A- 5 087 472
- US-A1- 2007 142 469
- GALFI P: "Feeding trial in pigs with a diet containing sodium n-butyrate", ACTA VETERINARIA HUNGARICA, BUDAPEST, HU, vol. 38, no. 1-2, 1 January 1990 (1990-01-01), pages 3-17, XP008113230, ISSN: 0236-6290
- DEETZ LE, RICHARDSON CR, PRITCHARD RH, PRESTON RL.: "Feedlot performance and carcass characteristics of steers fed diets containing ammonium salts of the branched-chain fatty acids and valeric acid", ARCHIV FÜR TIERERNAEHRUNG, vol. 61, no. 6, December 1985 (1985-12), pages 1539-1549,
- George A. Burdock: "Encyclopedia of Food and Color additives", 1997, CRC Press * page 1047 - page 1048 * * page 2887 - page 2888 * * page 1881 *
- MENTSCHEL J ET AL: "BUTYRIC ACID STIMULATES RUMEN MUCOSA DEVELOPMENT IN THE CALF MAINLY BY A REDUCTION OF APOPTOSIS", ARCHIV FUER TIERERNAEHRUNG - ARCHIVES OF ANIMAL NUTRITION, AKADEMIE VERLAG, BERLIN, DE, vol. 55, no. 2, 1 January 2001 (2001-01-01), pages 85-102, XP009010018, ISSN: 0003-942X

## Description

The present disclosure is directed to an animal feed or human food for improving barrier properties of the intestinal mucosa, in particular for use in farming of mono-gastric animals such as pigs, poultry, including turkey, and pets such as dogs, cats, as well as horses, rabbits and young ruminants and fish species. The disclosure is further directed to dietary modifications for humans for improving barrier properties.

The intestinal mucosa is the first layer of the gastrointestinal tract on the luminal side. This layer comes in direct contact with ingested food, and micro-organisms residing in the gut. Thus this layer is responsible for the important processes in digestion such as absorption, secretion and in barrier function.

The gastrointestinal mucosa comprises epithelial cells, which are held together with so called tight junctions.

The tight junction, also called *zona occludens,* is a specialized cell-cell interaction that is found in almost all types of epithelial cell lines in different organs in the body. Tight junctions are the closely associated areas of two adjacent cells whose membranes join together forming a virtually impermeable barrier to gastrointestinal contents. A tight junction comprises densely packed protein complexes that provide contact between the membranes of two adjacent cells.

One of the functions of tight junctions is regulating the passage of molecules and ions through the space between cells. The tight junction represents a major barrier for paracellular transport, *i.e.* transport through the intercellular spaces between epithelial cells, and may prevent such passage of molecules and ions. Consequently, materials must enter the epithelial cells, through *e.g.* diffusion or active transport, in order to pass through the tissue. This is called transcellular transport and such transport provides control over what substances are allowed through *e.g.* the intestinal mucosa. Epithelia are classed as 'tight' or 'leaky' depending on the ability of the tight junctions to prevent water and solute movement through intercellular space.

An important task of the intestine is to form a defensive barrier to prevent absorption of damaging substances from the external environment. This protective function is mainly dependent on the barrier properties of the intestinal mucosa. The permeability of the intestinal mucosa is determined at least in part by the strength of the tight junctions of the intestinal epithelial cells.

There are a number of factors that may affect tight junctions, including food components such as gluten and casein in some individuals. Infectious organisms such as specific pathogenic strains of *E. coli, Salmonella* and *C*. *difficile* have the ability to disrupt the tight junction protein complexes between the epithelial cells and setting up an infection. Disruption of the tight junctions may result in lowering the barrier properties of the intestinal mucosal epithelium, leading to leaky gut.

Dysfunction of the gut barrier of intestinal mucosa, as encountered by animals, including fish, due to disruption of tight junctions in stressful situations and/or during immuno-suppression may result in septicemia, and/or toxemia, leading to a decreased feed efficiency in animals or food uptake in humans.

Currently little or no attention is paid in animal nutrition to the gut barrier properties. Treatments or nutritional supplementations to improve the mucosal integrity are largely unknown. However, there have been sporadic reports suggesting that specific nutrients such as the amino acid glutamine may help in a decreasing in gut permeability and may lead to an improved functioning of the mucosal barrier.

However the disadvantage of such compounds is their limited efficacy and also problems with respect to handling and storage. Lassiter et al. (Journal of Animal Science 1958; 17:358-362) describe the effect of valeric acid and a combination of valeric and isovaleric acids on milking cows. It was shown that valeric acid increased the digestibility of dry matter, organic matter, crude fiber and nitrogen-free extract. These improvements are believed to be associated with processes in the rumen only. However, this effect was not found when valeric acid was used in combination with isovaleric acid.

Papas et al. describe in Journal of Dairy Science 1984, vol. 67(2), pp 276-293 the effects of feeding cows with a blend of ammonium salts of valeric acid, isovaleric acid, 2-methylbutyric acid and isobutyric acid on production, reproduction and health of dairy cows. The blend appeared effective for increasing production of milk.

CA-A-1 184 416 describes a feed supplement composition for ruminant animals to increase milk production of cows, which composition comprises ammonium isobutyrate, ammonium valerate, ammonium isovalerate and ammonium 2-methylbutyrate.

WO2008/135180 describes a pet food having a concentration of butyric acid of 5 ppm to 10,000 ppm and/or a concentration of 3-methylbutyric acid of 4 ppm to 10,000 ppm, and/or a salt thereof.

EP 1 661 574 describes a composition for delivering a beta-hydroxy short-medium chain fatty acid or an oligomer thereof to the large intestine, which comprises a polymer of the beta-hydroxy short-medium chain fatty acid.

Galfi and Bokori (1990, Acta Veterinaria Hungarica 38 (1-2), pp. 3-17) describes feeding trials in pigs with a diet containing sodium n-butyrate.

Deetz et al. (1985, J. Anim. Sci. 61, pp. 1539-1549) describe feedlot performance and carcass characteristics of steers fed diets containing ammonium salts of the branched-chain fatty acids and valeric acid.

Dysfunctional tight junctions in humans may lead to conditions such as inflammatory bowel disease (IBD), Crohn's disease and Coeliac disease, as described by Edelblum and Turner (Current Opinion in Pharmacology, 9(6) (2009) 715-720); Shen et al. (Digestive Diseases, 27(4) (2009) 443-449); and Pizzuti et al. (Digestive and Liver Disease, 36(5) (2004) 337-341), respectively.

Objective of the present invention is to provide an animal feed that at least in part solves the problem of dysfunction of the gut barrier as described hereinabove.

Providing use of valeric acid, a salt of valeric acid, an ester of valeric acid, or combinations thereof in an animal feed for feeding monogastric farming animals or pet animals, wherein the dosage of said valeric acid, salt of valeric acid, ester of valeric acid, or combinations thereof in said animal feed is 0.025 wt.% or higher, based on the total weight of said animal feed.

The inventors surprisingly found that C5 acid compounds have a positive effect on the barrier properties of the intestinal mucosa of mammals, including humans. Without wishing to be bound by theory, it is expected that C5 acid compounds strengthen the tight junctions in the intestinal epithelial cells, thereby increasing the barrier for paracellular transport. It was found that feeding animals C5 acid compounds both improves the feed conversion ratio and the health of animals. The presence of C5 acid compounds in animal feed is further expected to decrease the risk of septicemia and toxemia in animals from ingested materials and gastrointestinal contents.

The C5 acid compound was found to improve the general condition of the animals. In particular it is believed that feeding the C5 acid compound as taught herein, results in improving the mucosal barrier properties, which in turn prevents the colonization/translocation of the food borne pathogens, such as *Salmonella* and *Campylobacter.*

The term "C5 acid compounds" as used herein is defined as a compound chosen from the group consisting of C5 acids, salts of C5 acids, esters of C5 acids and combinations thereof. Preferably, ammonium and calcium ions are used as cations in salts of C5 acids, such as in ammonium valerate or calcium isovalerate. Esters of C5 acids are preferably formed with ethanol or methanol, i.e. methyl and ethyl esters of C5 acids. Examples of esters of C5 acids are ethyl valerate and butyl isovalerate.

The term "C5 acids" as used herein is defined as acids that comprise exactly five carbon atoms. C5 acids typically have the formula C₅H₁₀O₂. Examples of C5 acids are valeric acid (pentanoic acid), isovaleric acid (3-methylbutanoic acid) and 2-methylbutanoic acid. Preferably, the C5 acid compounds are based on valeric acid or isovaleric acid.

The C5 acid compounds as taught herein, in particular if the animal feed has been subject to fermentation. These "natural" levels of C5 acid compounds are however generally much lower than 0.025 wt.%. In accordance with the present disclosure the levels of C5 acid compounds are adjusted to the required concentrations by adding C5 acid compounds, preferably of synthetic origin. Thus the present disclosure also teaches a process for producing an animal feed, which process comprising a step of adding a C5 acid compound, preferably of synthetic origin to an animal feed, such that the total level of C5 acid compounds in said animal feed is 0.025 wt.% or higher, based on the total weight of said animal feed.

The feed conversion ratio (FCR) is a measure of an animal's efficiency in converting feed mass into increased body mass and can be defined as the mass of the food eaten divided by the body mass gain taken over a specified period of time.

A valerate, isovalerate, 2-methylbutyrate and butyrate are defined herein as a salt or ester of valeric acid, isovaleric acid, 2-methylbutanoic acid and butanoic acid respectively.

Preferably, the animal feed as taught herein comprises one or more C5 acid compounds chosen from the group consisting of valeric acid, valerate, isovaleric acid, and isovalerate.

The animal feed may comprise a combination of different C5 acid compounds.

The amount of C5 acid compound in the animal feed as taught herein is preferably more than 0.025 wt.% and more preferably not more than 1 wt.%, even more preferably 0.1-0.75 wt.%.

The animal feed as taught herein may further comprise butyric acid (butanoic acid) or butyrate. Such a compound may in combination with a C5 acid compound have a synergistic effect on the barrier properties of the intestinal mucosa when provided in the animal feed as taught herein.

The dosage of said butyric acid or butyrate in said animal feed is preferably 0.01 wt.% or higher, based on the total weight of said animal feed, more preferably 0.02 to 0.75 wt.%, even more preferably 0.025 to 0.15 wt%, even more preferably 0.03 to 0.1 wt.%.

The animal feed as taught herein may be provided by enriching a basic animal feed in a C5 acid compound, such that a desired daily dosage is obtained. The desired dosage depends on several factors, such as the kind of animal and the age of the animal. It was found that the above-mentioned concentrations and preferred concentrations of the feed provide for a versatile animal feed that can be readily fed to animals.

The desired concentrations of C5 acid compound in the animal feed, required to obtain the suitable dosages of C5 acid compound, are most conveniently obtained by using a premix. Such a premix may comprise other dietary supplements and may be mixed with conventional animal feed to obtain the animal feed as taught herein. A premix in accordance with the present disclosure may contain typically 1 to 50 wt.% C5 acid compound, but this depends mainly on the amount of premix that is to be used to provide the final feed composition. All amounts expressed in weight ratios in the present description and claims are calculated on a dry matter basis. The amount of premix used varies usually between 0.1 to 20%, preferably from 1 to 10% based on the total weight of the mixed feed.

A conventional animal feed can be used as a starting material for the animal feed as taught herein. The basis of such a feed is mainly determined by the animal to be fed and common considerations such as price and availability.

As mentioned, the feed as taught herein is usually further supplemented by other components, such as vitamins, minerals and amino acids.

A suitable vitamin to be added in accordance with the present teaching is for instance vitamin E, which can be applied in amounts of typically 20 - 100 IU (international units) per kg feed.

A suitable mineral to be added in accordance with the present teaching is for instance selenium, which can be applied in amounts of typically 0.1 - 0.5 mg per kg feed.

A suitable amino acid to be added in accordance with the present teaching is for instance tryptophan, which can be applied in amounts of typically 10 to 30% relative to the total content of lysine present in the feed.

Other additives are for instance yeast products. Suitable yeast products to be added in accordance with the present teaching are one or more of 1,3/1,6-glucan containing yeast products. These compounds can be applied in amounts of typically 50 to 5000 mg per kg feed.

The above considerations for an animal feed as taught herein apply *mutatis mutandis* for food products for human consumption. When used in food stuffs, the product may contain a basic component, *e.g.* a product selected from beverages, bread, cereals and other grain products, dairy/eggs, fish and shellfish, fruit and related products, meat and poultry, pasta, rice and other grains, processed meat products, soups, vegetables and combinations thereof. In addition to the basic component the food product as taught herein contains the C5 acid compound as mentioned above. Thus the present teaching may be used to provide a therapy (including a prophylactic) for conditions such as inflammatory bowel disease (IBD), Crohn's disease and Coeliac disease mentioned above, as well as other conditions, such as environmental enteropathy in children, where gut barrier function is hampered and gut permeability is increased. All these conditions are believed to be associated with dysfunctional tight junctions. Furthermore, the present teaching may be used to provide nutritional supplementation as a supportive treatment for recovery from gastrointestinal surgeries and diarrheal diseases, caused by gastro-intestinal pathogens and/or the gastrointestinal parasitic infestations, which are known to cause the disruption of gastrointestinal mucosa and hampered gut barrier function.

Suitable doses for human application are typically 5 mg/kg BW (mg per kg bodyweight) or higher.

The present teaching is also directed to a method for improving the feed efficiency and/or health in animals, comprising feeding an animal C5 acid compound. The animal feed and method as taught herein may be applied to various animals, in particular mammals. Preferred mammals are those that are farming animals, *viz.* animals kept for production aspects like meat, and milk, especially those selected from bovine species, equine species, porcine species, caprine and ovine species. Also feeding to pet animals is envisaged. Particularly good results are obtained with monogastric animals, in particular pigs. Also good results are obtained with young animals. Young monogastric animals, in particular young pigs, are particularly preferred.

### Examples

In the following examples the intestinal barrier function of piglets exposed to a valeric acid containing diet was investigated. The aim of the study was to determine the effect of valeric acid addition to the diet on the intestinal barrier function of piglets.

### Animals

Twelve male growing pigs, with an average body weight of *ca.* 15 kg, randomly allocated to two treatments, were fed with a control diet and a test diet (with the active ingredient valeric acid 0.1 wt.% or 1 kg/ton). Piglets were fed on the respective diets for two weeks. At the end of the experimental period piglets were sacrificed and intestinal tissues (jejunum) were collected for the analysis of intestinal tight junction proteins.

### Detection of two tight junction proteins (Claudin-4 and E-Cadherin) by western-blot

The intestinal samples of 12 animals were obtained at the Swine Research Centre in Boxmeer. The samples were frozen in liquid nitrogen and kept at -80°C.

Frozen tissue was washed in an anti-protease cocktail (4-(2-aminoethyl; benzenesulfonyl fluoride hydrochloride; aprotinin; leupeptine; antipaïn; pepsatin A; benzamidine, Sigma) prepared in PBS-EGTA (0.25 M). The samples were then lysed on ice in a Potter tissue grinder with lysis buffer (20 mM Tris-HCL pH8, 5mM EDTA, 0.02% NaN3, 1% Triton X100) supplemented with antiproteases. The solution was homogenized through a 26G needle and sonicated for 3 times 20 sec. The homogenate was diluted with sample buffer (200 mM Tris-HCl pH 6.8, 30% glycerol, 15% β-mercaptoethanol, 6% SDS, 0.3% bromophenol blue) and heated at 100 °C for 10 minutes, followed by protein quantification as described by Pinton et al. (Toxicol. Appl. Pharmacol. 237(2009)41-8).

15 µg of total protein from tissues was separated by SDS-PAGE and transferred onto nitrocellulose membranes. The membranes were blocked with PBS-Tween 5% skimmed milk and incubated with mouse anti-claudin-4 (Zymed Laboratories), Rabbit anti-E- Cadherin (Cell Signaling, Danvers, MA) antibodies and rabbit anti-β-actin (Cell-Signaling, Danvers, MA) antibodies diluted 1:500 or 1:1000 (anti-β-actin), in PBS milk 0.5%. After washing, they were incubated with 1:10000 (detection of claudin-4) CFTM680 Goat-AntiMouse IgG (Biotium,Intrechim) or with 1:10000 (detection of E-Cadherin and β-actin) CFTM680 and CFTM780 Goat-Anti-Rabbit IgG (Biotium,Intrechim) Membranes were analyzed using an Odyssey Infrared Imaging System (LI-COR; ScienceTec, Les Ulis, France). Fluorescent intensities for two channels (1 for protein of interest, 1 for β-actin normalization) were determined using LI-COR imaging software after correction for background. The resulting ratio of the intensity of tight junction band and of the β-actin band in the same sample was compared between the different piglets groups.

### Statistical analysis

Statistical analysis was done using Proc GLM in SAS (9.1). A value of P < 0.05 was considered statistically significant.

### Results

### Effect of valeric acid on the intestinal expression of tight junction proteins.

It was found that addition of valeric acid to the diet had a significant effect (*P*<0.05). Intestinal samples were tested for the expression of tight junction. The gut barrier is formed to a large extent by tight junctions that seal the luminal end of the intercellular space and limit transport by this paracellular route to relatively small hydrophilic molecules.

Tight junctions are multiple transmembrane, scaffolding and signaling proteins, including the claudin isoforms. A tight junction protein which was assessed is Claudin-4. Also the effect on the expression of Cadherin was investigated. That protein belongs to the adherens junction, which is immediately subjacent to the tight-junction, and plays an important role in the formation of tight-junction. E-cadherin is the main cadherin in the intestinal epithelium and its function is regulated by dietary components.

The average of the resulting ratios of the intensity of tight junction band and of the β-actin band in the same sample was calculated: (tight junction protein / β-actin) × 10. The different averages were compared between the different piglets groups: see tables and graphs below.

**Table 1 Expression of E-cadherin in jejunal sample**

| Animal treatment (+/- Valeric acid) | Animal | target protein | house keeping protein | E-cadherin / B actin ratio | ratio x 10 |
|---|---|---|---|---|---|
| | | E-cadherin | B-actine | | |
| 0 | 1 | 11.32 | 35.73 | 0.32 | 3.1682 |
| 0 | 16 | 11.14 | 64.82 | 0.17 | 1.7186 |
| 0 | 17 | 10.64 | 38.26 | 0.28 | 2.781 |
| 0 | 19 | 10.91 | 61.68 | 0.18 | 1.7688 |
| 0 | 21 | 11.77 | 93.38 | 0.13 | 1.2604 |
| 0 | 24 | 11.51 | 78.85 | 0.15 | 1.4597 |
| Valeric acid | 14 | 19.18 | 62.17 | 0.31 | 3.0851 |
| Valeric acid | 15 | 14.07 | 47.6 | 0.3 | 2.9559 |
| Valeric acid | 18 | 14.78 | 50.85 | 0.29 | 2.9066 |
| Valeric acid | 20 | 17.59 | 27.04 | 0.65 | 6.5052 |
| Valeric acid | 22 | 15.6 | 59.78 | 0.26 | 2.6096 |
| Valeric acid | 23 | 19.79 | 68.35 | 0.29 | 2.8954 |

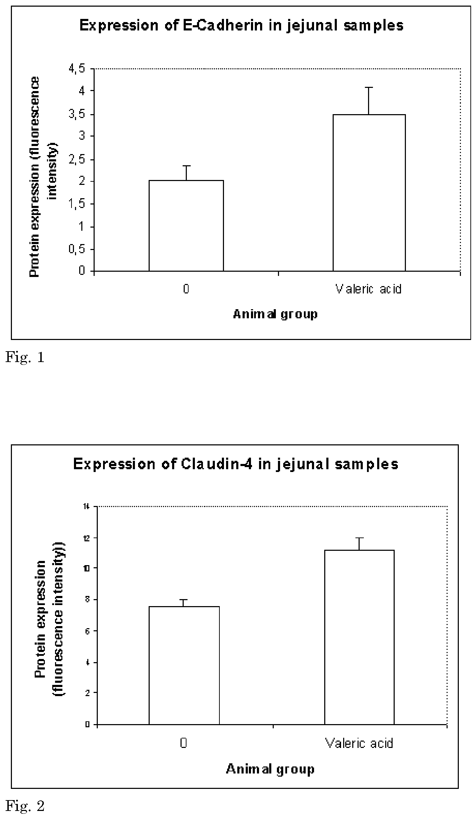

Figure 1 summarizes these results.

**Table 2 Expression of Claudin-4 in jejunal sample**

| Animal treatment (+/- Valeric acid) | Animal | target protein | house keeping protein | Claudin-4/ B actin ratio | ratio x 10 |
|---|---|---|---|---|---|
| | | Claudin-4 | B-actine | | |
| 0 | 1 | 24.29 | 31.51 | 0.77 | 7.7 |
| 0 | 16 | 18.21 | 25.69 | 0.71 | 7.1 |
| 0 | 17 | 21.69 | 30.25 | 0.72 | 7.2 |
| 0 | 19 | 18.28 | 29.73 | 0.61 | 6.1 |
| 0 | 21 | 23.77 | 28.22 | 0.84 | 8.4 |
| 0 | 24 | 25.1 | 27.88 | 0.9 | 9 |
| Valeric acid | 14 | 10.71 | 11.26 | 0.95 | 9.5 |
| Valeric acid | 15 | 11.76 | 13.89 | 0.85 | 8.5 |
| Valeric acid | 18 | 12.16 | 10.28 | 1.18 | 11.8 |
| Valeric acid | 20 | 10.94 | 10.29 | 1.06 | 10.6 |
| Valeric acid | 22 | 12.51 | 9.37 | 1.34 | 13.4 |
| Valeric acid | 23 | 12.39 | 9.3 | 1.33 | 13.3 |

Figure 2 summarizes these results.

The average effects were calculated to be as follows.

**Table 3 Effects of different diets on the ratios (tight junction protein / B actin ratio). Average ratios × 10 were calculated as well as the standard error.**

| | **E-Cadherin** | **Claudin-4** |
|---|---|---|
| **- valeric acid** | 2.026117 +/- 0.313163 | 7.583333 +/- 0.41906 |
| **+ valeric acid** | 3.492967 +/- 0.605794 | 11.18333 +/- 0.819519 |

As indicated above, for the two proteins, an effect of valeric acid is observed. Ingestion of the diet was associated with an increased expression of Claudin-4 and E-Cadherin.

### Conclusion

The data clearly indicate that addition of valeric acid to the diet has a positive effect on strengthening gut barrier function. This effect was observed on the expression of tight junction proteins.

## Claims

1. Use of valeric acid, a salt of valeric acid, an ester of valeric acid, or combinations thereof in an animal feed for feeding monogastric farming animals or pet animals, wherein the dosage of said valeric acid, a salt of valeric acid, an ester of valeric acid, or combinations thereof in said animal feed is 0.025 wt.% or higher, based on the total weight of said animal feed.

2. Use according to claim 1, wherein the monogastric farming animals are selected from the group consisting of equine species, porcine species, birds, fish, or pet animals.

3. Use according to any one of claims 1 or 2, wherein the animal feed further comprises butyric acid, butyrate, or both.

4. Use according to any one of claims 1-3, wherein the dosage of said valeric acid, a salt of valeric acid, an ester of valeric acid, or combinations thereof in said animal feed is in the range of 0.1-1 wt.%.

5. Use according to any one of claims 3-4, wherein the dosage of said butyric acid, butyrate, or both, is 0.01 wt.% or higher, based on the total weight of said animal feed.

6. Use of an animal feed comprising valeric acid, a salt of valeric acid, an ester of valeric acid, or combinations thereof, wherein the dosage of said valeric acid, a salt of valeric acid, an ester of valeric acid, or combinations thereof in said animal feed is 0.025 wt.% or higher, based on the total weight of said animal feed, for improving the feed efficiency of monogastric farming animals or pet animals.

7. Animal feed comprising valeric acid, a salt of valeric acid, an ester of valeric acid, or combinations thereof, wherein the dosage of said valeric acid, a salt of valeric acid, an ester of valeric acid, or combinations thereof in said animal feed is 0.025 wt.% or higher, based on the total weight of said animal feed, for use in strengthening the tight junctions in the intestinal epithelial cells, and/or for improving the barrier properties of the intestinal mucosa of mammals.

8. Animal feed comprising valeric acid, a salt of valeric acid, an ester of valeric acid, or combinations thereof, wherein the dosage of said valeric acid, a salt of valeric acid, an ester of valeric acid, or combinations thereof in said animal feed is 0.025 wt.% or higher, based on the total weight of said animal feed, for use in improving the health of monogastric farming animals or pet animals.

9. Animal feed comprising valeric acid, a salt of valeric acid, an ester of valeric acid, or combinations thereof, wherein the dosage of said valeric acid, a salt of valeric acid, an ester of valeric acid, or combinations thereof in said animal feed is 0.025 wt.% or higher, based on the total weight of said animal feed, for use in decreasing the risk of poisoning, septicemia or toxemia of animals by ingested materials, gastrointestinal contents, or both.

## Patentansprüche

1. Verwendung von Valeriansäure, einem Salz der Valeriansäure, einem Ester der Valeriansäure oder von Kombinationen davon in einem Tierfutter zum Füttern monogastrischer Nutztiere oder Haustiere, wobei die Dosierung der Valeriansäure, eines Salzes der Valeriansäure, eines Esters der Valeriansäure oder von Kombinationen davon in dem Tierfutter basierend auf dem Gesamtgewicht des Tierfutters 0,025 Gewichtsprozent oder höher ist.

2. Verwendung nach Anspruch 1, wobei die monogastrischen Nutztiere ausgewählt sind aus der Gruppe bestehend aus der Spezies der Pferde, der Spezies der Schweine, Vögel, Fischen oder Haustieren.

3. Verwendung nach einem der Ansprüche 1 oder 2, wobei das Tierfutter weiterhin Buttersäure, Butyrat oder beides aufweist.

4. Verwendung nach einem der Ansprüche 1 bis 3, wobei die Dosierung der Valeriansäure, eines Satzes der Valeriansäure, eines Esters der Valeriansäure oder von Kombinationen davon in dem Tierfutter im Bereich von 0,1 bis 1 Gewichtsprozent liegt.

5. Verwendung nach einem der Ansprüche 3 bis 4, wobei die Dosierung der Buttersäure, des Butyrats oder von beiden basierend auf dem Gesamtgewicht des Tierfutters 0,01 Gewichtsprozent oder höher ist.

6. Verwendung von Tierfutter, das Valeriansäure, ein Salz der Valeriansäure, einen Ester der Valeriansäure oder Kombinationen davon aufweist, wobei die Dosierung der Valeriansäure, eines Salzes der Valeriansäure, eines Esters der Valeriansäure oder von Kombinationen davon in dem Tierfutter basierend auf dem Gesamtgewicht des Tierfutters 0,025 Gewichtsprozent oder höher ist, um die Wirksamkeit der Fütterung von monogastrischen Nutztieren und Haustieren zu verbessern.

7. Tierfutter, das Valeriansäure, ein Salz der Valeriansäure, einen Ester der Valeriansäure oder Kombinationen davon aufweist, wobei die Dosierung der Valeriansäure, eines Salzes der Valeriansäure, eines Esters der Valeriansäure oder von Kombinationen davon in dem Tierfutter basierend auf dem Gesamtgewicht des Tierfutters 0,025 Gewichtsprozent oder höher ist, zur Verwendung einer Stärkung der engen Verbindungen in den Darmepithelzellen und/oder zur Verbesserung der Barriereeigenschaften der Darmschleimhaut von Säugetieren.

8. Tierfutter, das die Verwendung von Valeriansäure, einem Salz der Valeriansäure, einem Ester der Valeriansäure oder von Kombinationen davon aufweist, wobei die Dosierung der Valeriansäure, eines Salzes der Valeriansäure, eines Esters der Valeriansäure oder von Kombinationen davon in dem Tierfutter basierend auf dem Gesamtgewicht des Tierfutters 0,025 Gewichtsprozent oder höher ist, zur Verwendung zur Verbesserung der Gesundheit von monogastrischen Nutztieren oder Haustieren.

9. Tierfutter, das die Verwendung von Valeriansäure, einem Salz der Valeriansäure, einem Ester der Valeriansäure oder von Kombinationen davon aufweist, wobei die Dosierung der Valeriansäure, eines Salzes der Valeriansäure, eines Esters der Valeriansäure oder von Kombinationen davon in dem Tierfutter basierend auf dem Gesamtgewicht des Tierfutters 0,025 Gewichtsprozent oder höher ist, zur Verwendung für die Senkung des Risikos einer Vergiftung, einer Sepsis oder Toxämie der Tiere durch aufgenommene Materialien, gastrointestinale Inhalte oder beides.

## Revendications

1. Utilisation de l'acide valérique, d'un sel de l'acide valérique, d'un ester de l'acide valérique, ou de leurs combinaisons dans un aliment pour animaux pour alimenter des animaux d'élevage monogastriques ou des animaux de compagnie, dans laquelle le dosage dudit acide valérique, d'un sel de l'acide valérique, d'un ester de l'acide valérique, ou de leurs combinaisons dans ledit aliment pour aliments est de 0,025 % en poids ou supérieur, en se basant sur le poids total dudit aliment pour animaux.

2. Utilisation selon la revendication 1, dans laquelle les animaux d'élevage monogastriques sont choisis dans le groupe constitué d'espèces équines, d'espèces porcines, d'oiseaux, de poissons, ou d'animaux de compagnie.

3. Utilisation selon l'une quelconque des revendications 1 ou 2, dans laquelle l'aliment pour animaux comprend en outre de l'acide butyrique, du butyrate, ou les deux.

4. Utilisation selon l'une quelconque des revendications 1 à 3, dans laquelle le dosage dudit acide valérique, d'un sel de l'acide valérique, d'un ester de l'acide valérique, ou de leurs combinaisons dans ledit aliment pour animaux se situe dans la plage de 0,1 à 1 % en poids.

5. Utilisation selon l'une quelconque des revendications 3 ou 4, dans laquelle le dosage dudit acide butyrique, butyrate, ou des deux, est de 0,01 % en poids ou supérieur, en se basant sur le poids total dudit aliment pour animaux.

6. Utilisation d'un aliment pour animaux comprenant de l'acide valérique, un sel de l'acide valérique, un ester de l'acide valérique, ou leurs combinaisons, dans laquelle le dosage dudit acide valérique, d'un sel de l'acide valérique, d'un ester de l'acide valérique, ou de leurs combinaisons dans ledit aliment pour animaux est de 0,025 % en poids ou supérieur, en se basant sur le poids total dudit aliment pour animaux, pour améliorer l'efficacité de l'alimentation des animaux d'élevage monogastriques ou des animaux de compagnie.

7. Aliment pour animaux comprenant de l'acide valérique, un sel de l'acide valérique, un ester de l'acide valérique, ou leurs combinaisons, dans lequel le dosage dudit acide valérique, d'un sel de l'acide valérique, d'un ester de l'acide valérique, ou de leurs combinaisons dans ledit aliment pour animaux est de 0,025 % en poids ou supérieur, en se basant sur le poids total dudit aliment pour animaux, pour une utilisation dans le renforcement des jonctions serrées des cellules épithéliales intestinales, et/ou pour l'amélioration des propriétés de barrière de la muqueuse intestinale des mammifères.

8. Aliment pour animaux comprenant de l'acide valérique, un sel de l'acide valérique, un ester de l'acide valérique, ou leurs combinaisons, dans lequel le dosage dudit acide valérique, d'un sel de l'acide valérique, d'un ester de l'acide valérique, ou de leurs combinaisons dans ledit aliment pour animaux est de 0,025 % en poids ou supérieur, en se basant sur le poids total dudit aliment pour animaux, pour une utilisation dans l'amélioration de la santé des animaux d'élevage monogastriques ou des animaux de compagnie.

9. Aliment pour animaux comprenant de l'acide valérique, un sel de l'acide valérique, un ester de l'acide valérique, ou leurs combinaisons, dans lequel le dosage dudit acide valérique, d'un sel de l'acide valérique, d'un ester de l'acide valérique, ou de leurs combinaisons dans ledit aliment pour animaux est de 0,025 % en poids ou supérieur, en se basant sur le poids total dudit aliment pour animaux, pour une utilisation dans la diminution du risque d'empoisonnement, de septicémie ou de toxémie des animaux par des matériaux ingérés, le contenu gastro-intestinal, ou les deux.
